# EUROPÄISCHE PATENTSCHRIFT

(11) **EP 2 085 191 B1**
(45) Veröffentlichungstag und Bekanntmachung des Hinweises auf die Patenterteilung: **27.04.2016**
(21) Anmeldenummer: 09001053.9
(22) Anmeldetag: 27.01.2009
(51) Int. Cl.: B25F 5/00

(54) **Antriebsgerät für Werkzeuge, vorzugsweise für Kernbohrkronen**
Drive device for tools, especially core drill bits
Appareil d'entraînement pour outils, de préférence pour outils de carottage

(30) Priorität: 04.02.2008 DE 102008009233
(43) Veröffentlichungstag der Anmeldung: 05.08.2009
(73) Patentinhaber: REMS-WERK Christian Föll und Söhne GmbH, 71332 Waiblingen (DE)
(72) Erfinder:
(74) Vertreter: Jackisch-Kohl, Anna-Katharina

(56) Entgegenhaltungen:
- EP-A- 0 659 525
- EP-A- 1 561 547
- EP-A- 1 878 541
- WO-A-01/85399
- GB-A- 2 219 104
- GB-A- 2 404 891
- US-B1- 6 424 799
- US-B1- 6 536 536

## Beschreibung

Die Erfindung betrifft ein Verfahren zur Verwendung eines Antriebsgerätes für Werkzeuge, vorzugsweise für Kernbohrkronen, nach Anspruch 1.

Insbesondere beim Arbeiten mit Kernbohrkronen tritt das Problem auf, dass sie beim Bohrvorgang entweder hängenbleiben oder auf Widerstand stoßen. Je nach Höhe des Widerstandes geht die Drehzahl der Abtriebswelle zurück, so dass ein Bohrfortschritt erschwert ist. Blockiert das Antriebsgerät, wird die Stromaufnahme so weit verringert, dass eine Überlastung des Antriebsmotors verhindert wird. Ein Verfahren zur Verwendung eines Antriebsgerätes gemäß dem Oberbegriff des Anspruchs 1 ist aus US 6 536 536 B1 bekannt.

Der Erfindung liegt die Aufgabe zugrunde, das gattungsgemäße Antriebsgerät so auszubilden, dass der Antriebsmotor nicht überlastet wird, aber dennoch ein rascher Bohrfortschritt gewährleistet ist.

Diese Aufgabe wird beim gattungsgemäßen Verfahren erfindungsgemäß mit den Merkmalen des Anspruches 1 gelöst.

Beim erfindungsgemäßen Verfahren wird die Drehzahl der Abtriebswelle durch die Regeleinheit auf einer Soll-Drehzahl gehalten. Tritt beim Arbeiten des mit dem Antriebsgerät verbundenen Werkzeuges ein Widerstand auf, sorgt die Regeleinheit dafür, dass die Drehzahl des Werkzeuges auf dem Sollwert so lange gehalten wird, wie die Belastung des Antriebsmotors unterhalb eines kritischen Wertes liegt. Wird der kritische Wert überschritten, schaltet die Regeleinheit auf einen niedrigeren Stromwert zurück. Der Antriebsmotor bleibt stehen. Wird das Antriebsgerät wieder entlastet, läuft der Antriebsmotor wieder an, so dass sich die Drehzahl der Abtriebswelle erhöht. Sobald die Drehzahl einen bestimmten Wert überschreitet, wird die eingestellte Soll-Drehzahl der Abtriebswelle angefahren, so dass augenblicklich mit der Soll-Drehzahl weitergearbeitet werden kann.

Vorteilhaft wird die Motorspannung belastungsabhängig angepasst, so dass stets ein optimales Arbeiten mit dem erfindungsgemäßen Antriebsgerät gewährleistet ist.

Weitere Merkmale der Erfindung ergeben sich aus den weiteren Ansprüchen, der Beschreibung und den Zeichnungen.

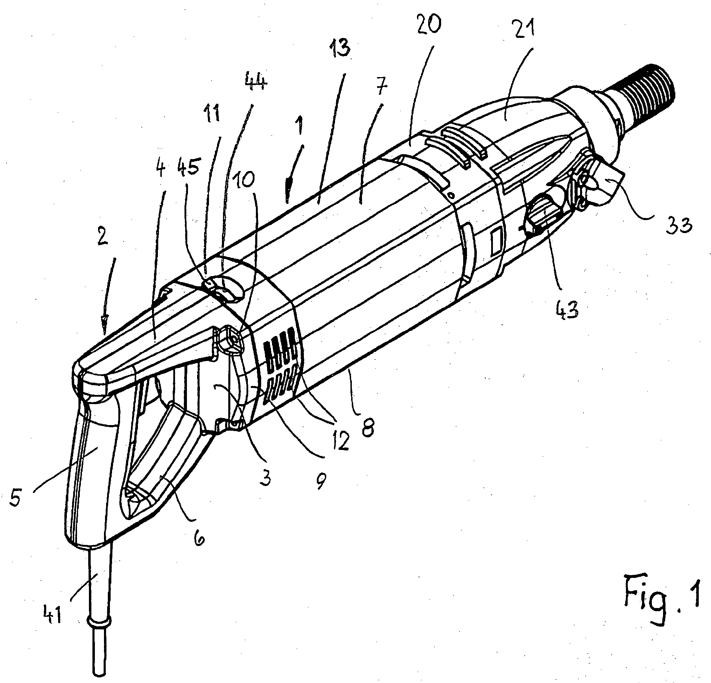

Die Erfindung wird anhand eines in den Zeichnungen dargestellten Ausführungsbeispieles näher erläutert. Es zeigen
- Fig. 1: in perspektivischer Darstellung ein erfindungsgemäßes Antriebsgerät,

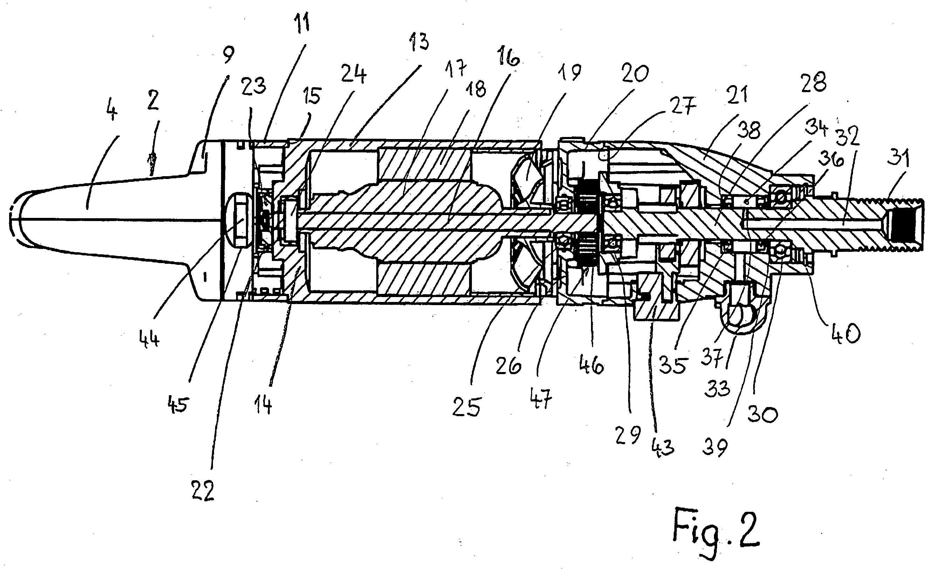

- Fig. 2: einen Schnitt durch das Antriebsgerät gemäß Fig. 1,
- Fig. 3: das erfindungsgemäße Antriebsgerät teilweise in Seitenansicht und teilweise im Schnitt,
- Fig. 4: eine Überlastkennlinie des erfindungsgemäßen Antriebsgerätes, bei der der Zündzeitpunkt nach Phasennulldurchgang gegen die Ist-Drehzahl des Antriebsgerätes aufgetragen ist,
- Fig. 5: die zulässige Motorspannung in Abhängigkeit zur Ist-Drehzahl des erfindungsgemäßen Antriebsgerätes.

Das Antriebsgerät dient dazu, Werkzeuge, beispielsweise eine Kernbohrkrone, drehbar anzutreiben. Das Antriebsgerät bildet ein tragbares Elektrowerkzeug, das beim Arbeiten mit dem jeweiligen Werkzeug von Hand geführt werden kann.

Das Antriebsgerät hat ein Gehäuse 1, das langgestreckt ausgebildet und an einem Ende mit einem Griff 2 versehen ist, an dem das Antriebsgerät während des Arbeitens gehalten werden kann. Der Griff 2 hat einen von der Stirnseite 3 des Gehäuses 1 abstehenden Schenkel 4, an dessen freies Ende ein quer, vorzugsweise senkrecht zu ihm liegender Steg 5 anschließt. Er ist am anderen Ende über einen weiteren Schenkel 6 mit der Stirnseite 3 des Gehäuses 1 verbunden. Die beiden Schenkel 4, 6 schließen im Bereich der Oberseite 7 sowie der Unterseite 8 an die Stirnseite 3 des Gehäuses 1 an. Die beiden Schenkel 4, 6 konvergieren in Richtung auf die Stirnseite 3 des Gehäuses 1. Der Schenkel 4 verläuft über seine Länge gerade und verjüngt sich in der Breite in Richtung auf den Steg 5. Der andere Schenkel 6 hat vorteilhaft über seine Länge gleiche Breite. Die beiden Schenkel 4, 6 stehen von einer Anschlussscheibe 9 ab, die mit Schrauben 10 und dergleichen an ein Zwischengehäuseteil 11 angeschlossen ist. Der Zwischengehäuseteil 11 weist an seinen Seitenflächen Lüftungsschlitze 12 auf.

Der als Ring ausgebildete Zwischengehäuseteil 11 verbindet die Anschlussscheibe 9 des Griffes 2 mit einem Gehäuseteil 13, der wesentlich länger als der Zwischengehäuseteil 11 ist. Mittels der Schrauben 10 sind die Anschlussscheiben 9 und der Zwischengehäuseteil 11 lösbar am Gehäuseteil 13 befestigt. Er hat einen Boden 14, der am Außenrand mit einer umlaufenden Vertiefung 15 versehen ist, in die der Zwischengehäuseteil 11 eingreift. Dadurch ist eine einfache radiale Ausrichtung der Gehäuseteile 11 und 13 zueinander gewährleistet. Im Boden 14 ist eine Motorwelle 16 drehbar gelagert, auf der drehfest ein Rotor 17 sitzt, der von einem Stator 18 umgeben ist, der an der Innenwand des Gehäuseteiles 13 befestigt ist. Auf der Motorwelle 16 sitzt drehfest ein Lüfterrad 19.

Die Motorwelle 16 ragt in einen Zwischengehäuseteil 20, der den Gehäuseteil 13 mit einem endseitigen Gehäuseteil 21 verbindet.

Im Zwischengehäuseteil 11, der als Ring ausgebildet ist und etwa gleiche Breite hat wie der Zwischengehäuseteil 20, befindet sich ein Kommutator 22, der auf der Motorwelle 16 befestigt ist und an dem Kohlebürsten 23 anliegen, die in Bürstenhaltern untergebracht sind.

Die Motorwelle 16 ist nahe ihren beiden Enden jeweils in einem Lager 24, 25 drehbar abgestützt. Das Lager 24 ist im Boden 14 des Gehäuseteiles 13 und das Lager 25 in einem Boden 26 des Gehäuseteiles 20 untergebracht. Beide Lager 24, 25 können Kugellager sein. Das Lager 25 befindet sich vorteilhaft zwischen dem Lüfterrad 19 und einem Zahnrad 46 eines Untersetzungsgetriebes 47.

An den Zwischengehäuseteil 20 ist der Gehäuseteil 21 angeschlossen, der formschlüssig mit dem Zwischengehäuseteil 20 verbunden ist. Der Zwischengehäuseteil 20 ist an seiner Stirnseite mit einer randoffenen, umlaufenden Vertiefung 27 versehen, in die der Gehäuseteil 21 mit einer entsprechend geformten Stirnseite eingreift.

Der Gehäuseteil 21 verjüngt sich in Richtung auf sein freies Ende. Im Gehäuseteil 21 ist eine Abtriebswelle 28 untergebracht, die im Gehäuseteil 21 über wenigstens zwei mit Abstand voneinander liegende Lager 29, 30 drehbar abgestützt ist. Beide Lager sind im Ausführungsbeispiel Kugellager, von denen das Lager 29 nahe dem Zwischengehäuseteil 20 angeordnet ist. Die Abtriebswelle 28 ist mit der Motorwelle 16 über das Untersetzungsgetriebe 47 verbunden, um die hohe Drehzahl der Motorwelle 16 auf die Arbeitsdrehzahl der Abtriebswelle 28 zu untersetzen. Diese Getriebeübersetzung kann einstufig oder auch mehrstufig ausgebildet sein. Das Untersetzungsgetriebe kann ein Stirnradgetriebe, ein Planetengetriebe oder ein anderes Untersetzungsgetriebe sein.

Die Abtriebswelle 28 steht stirnseitig über den Gehäuseteil 21 vor und ist am überstehenden Ende mit einem Anschluss für das jeweilige Werkzeug versehen. Der Anschluss 31 wird im Ausführungsbeispiel durch ein Außengewinde des überstehenden Teils der Abtriebswelle 28 gebildet, das sich bis zum freien Ende der Abtriebswelle 28 erstreckt. Die Abtriebswelle 28 wird über einen Teil ihrer Länge von einer Kühlmittelbohrung 32 axial durchsetzt, die in die Stirnseite der Abtriebswelle 28 mündet und über die das zum Bohren mit der Kernbohrkrone erforderliche Kühlmittel zuführt. Dieses Kühlmittel wird über einen Anschluss 33 an der Seitenwand des Gehäuser 21 zugeführt. An diesen Anschluss 33 wird eine Zuführleitung angeschlossen, über die das Kühlmedium von einem (nicht dargestellten) Vorratsbehälter aus zugeführt wird. Das Medium gelangt hinter dem Anschluss 33 in einen Ringraum 34 des Gehäuseteiles 21. In den Ringraum 34, der axial in beiden Richtungen durch jeweils eine Dichtung 35, 36 abgedichtet ist, mündet wenigstens eine Querbohrung 37, die die axiale Kühlmittelbohrung 32 mit dem Ringraum 34 verbindet. Der Ringraum 34 wird von der Abtriebswelle 28 durchsetzt, an der die Dichtungen 35, 36 dichtend anliegen. Die Dichtung 35 liegt an einer radialen Schulterfläche 38 des Gehäuseteiles 21 an. Die andere Dichtung 36 liegt am Lager 30 an, das seinerseits an einer radialen Schulterfläche 39 des Gehäuses 21 abgestützt ist. Das Lager 30 ist auf der anderen Seite durch wenigstens einen Sicherungsring 40 axial gesichert, der im Gehäuse 21 vorgesehen ist.

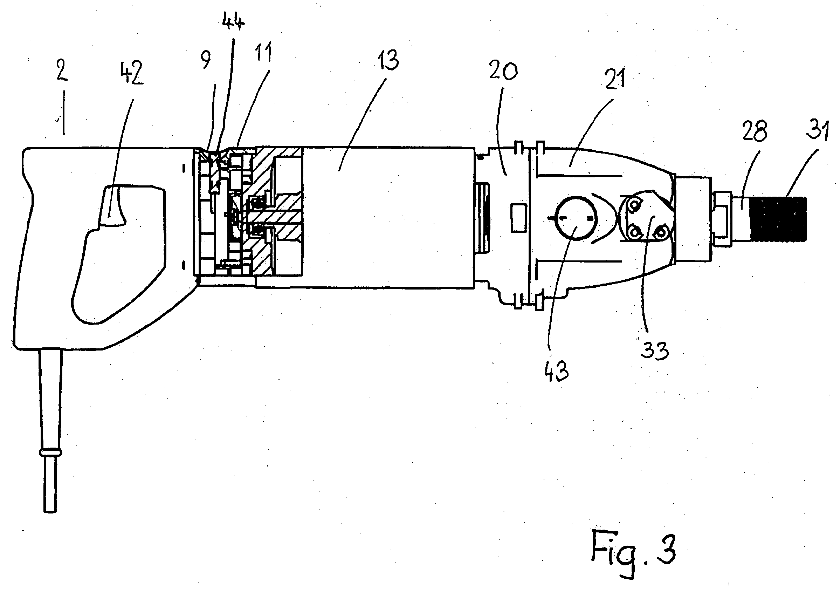

Aus dem Griff 2 ist eine Netzanschlussleitung 41 herausgeführt. Außerdem ist das Antriebsgerät mit einem Ein/Ausschalter 42 versehen (Fig. 3), der am Griff 2 angeordnet ist und somit während des Arbeitens mit dem Antriebsgerät bequem erreichbar ist.

Am Gehäuseteil 21 ist benachbart zum Anschluss 33 ein Schalter 43 gelagert, mit dem das Antriebsgerät auf zwei oder mehr Drehzahlstufen umgeschaltet werden kann.

Insbesondere beim Arbeiten mit Kernbohrkronen tritt das Problem auf, dass die Kernbohrkrone beim Bohrvorgang entweder hängenbleibt oder auf einen Widerstand, z.B. auf Armierungsstahl in einer Betonwand, innerhalb des zu durchbohrenden Materiales stößt. Beides führt dazu, dass die Drehzahl der Abtriebswelle 28 je nach Höhe des Widerstandes zurückgeht und dann ein Bohrfortschritt erschwert wird. Damit der Elektromotor des Antriebsgerätes im Blockadefall nicht überlastet wird, ein rascher Bohrfortschritt dennoch gewährleistet sein soll, ist das Antriebsgerät mit einer Regeleinheit versehen, die die Drehzahl der Abtriebswelle 28 und damit der Kernbohrkrone auf einer Soll-Drehzahl hält. Dadurch wird erreicht, dass beim Auftreten von Widerstand während des Bohrvorganges die Drehzahl der Abtriebswelle 28 und damit der Kernbohrkrone so lange beibehalten wird, wie die Stromaufnahme des Elektromotors unterhalb eines kritischen Wertes liegt. Überschreitet die Stromaufnahme des Elektromotors diesen kritischen Wert, dann wird die Stromaufnahme so weit verringert, dass eine Überlastung und Beschädigung des Elektromotors verhindert wird. Wird das Antriebsgerät anschließend entlastet bzw. die Blockade aufgehoben, erhöht sich die Drehzahl der Abtriebswelle 28 und der auf ihr sitzenden Kernbohrkrone. Sobald die Drehzahl einen bestimmten Wert überschreitet, erkennt die Elektronik der Regeleinheit, dass das Antriebsgerät entlastet worden ist. Dann wird wieder die eingestellte Soll-Drehzahl der Abtriebswelle 28 angefahren, so dass mit der Soll-Drehzahl weitergearbeitet werden kann. Die Soll-Drehzahl wird mit einem Potentiometer-Rad 44 eingestellt, das durch eine Öffnung 45 im Gehäuseteil 11 ragt.

Die Regeleinheit ist so ausgebildet, dass das Antriebsgerät nach dem Einschalten mittels des Schalters 42 sanft anläuft. Zu diesem Zweck wird der Anlaufstrom zum Schutz des Benutzers des Antriebsgerätes, des Antriebsgerätes selbst und der Netzspannungsversorgung begrenzt. Um eine hohe Bediensicherheit zu gewährleisten, kann das Antriebsgerät nur dann gestartet werden, wenn zunächst der Stecker der Netzanschlussleitung 41 eingesteckt und anschließend der Schalter 42 eingeschaltet wird. Ist der Schalter 42 eingeschaltet und wird erst anschließend der Netzstecker eingesteckt, tritt ein Wiederanlaufschutz in Funktion, der das Anlaufen des Antriebsgerätes verhindert.

Bei Erreichen einer vorgegebenen Abschalttemperatur wird das Antriebsgerät auf eine vorgegebene Drehzahl, beispielsweise auf 2.700 U/min abgesenkt und mit dieser geringen Drehzahl weiterbetrieben. Das Antriebsgerät ist jedoch nicht mehr belastbar, das heißt die Drehzahl der Abtriebswelle 28 wird nicht geregelt. Diese Abschaltung bei Erreichen einer bestimmten Abschalttemperatur wird durch eine Abschalteinrichtung, vorzugsweise eine PTC-Abschalteinrichtung, erreicht. Soll das Antriebsgerät wieder normal arbeiten, muss es mit dem Schalter 42 ausgeschaltet und anschließend wieder eingeschaltet werden. Sollte nach dem Einschaltet die Temperatur im Antriebsgerät immer noch zu hoch sein, wird die Drehzahl der Abtriebswelle 28 wieder auf die geringe Drehzahl eingestellt.

Sollte das Antriebsgerät während des Arbeitens schlagartig blockieren oder ein Tachobruch auftreten, dann wird die Drehzahl der Abtriebswelle 28 augenblicklich auf einen geringen Wert eingestellt. Dadurch dreht die Abtriebswelle 28 nur noch sehr langsam und ist nicht mehr belastbar. Diese Sicherheitseinrichtung verhindert beim Blockieren oder bei einer überhohen Drehzahl eine Beschädigung des Antriebsgerätes. Um mit dem Antriebsgerät nach einem solchen Störfall wieder ordnungsgemäß arbeiten zu können, muss es mit dem Schalter 42 ausgeschaltet und anschließend wieder eingeschaltet werden.

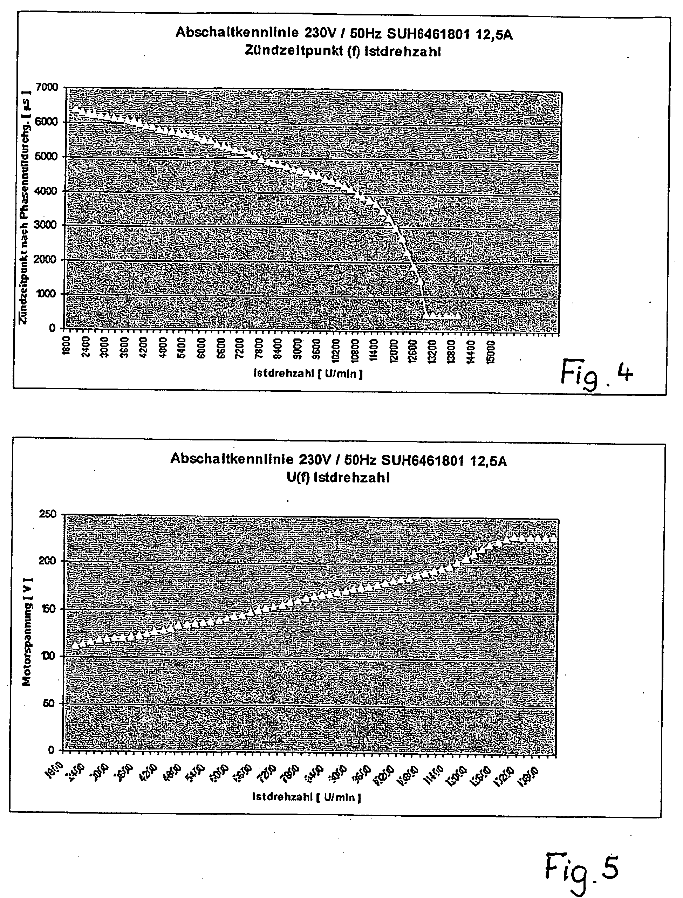

Bei Erreichen des Überlaststromes, beispielsweise bei etwa 11,5 A bis etwa 12,5 A, wird die Motorspannung reduziert. Fig. 4 zeigt die Überlastkennlinie, die in Form einer Tabelle in der Software hinterlegt ist. Die Regelelektronik versucht, die Ist-Drehzahl auf die am Potentiometer-Rad 44 eingestellte Soll-Drehzahl einzuregeln. Dies erfolgt durch eine belastungsabhängige Anpassung der Motorspannung. Wird das Antriebsgerät im Leerlauf betrieben, ist eine kleinere Motorspannung notwendig, um die eingeschaltete Drehzahl konstant zu halten, als wenn das Antriebsgerät unter Last arbeitet.

Die Regelelektronik arbeitet im Ausführungsbeispiel nach dem Prinzip der Phasenanschnittsteuerung. Bei ihr werden die zur Gleichrichtung verwendeten Halbleiterbauelemente, zum Beispiel Thyristoren oder Triacs, zu einem bestimmten Zeitpunkt während der Netzhalbwelle gezündet. Die Halbleiterbauelemente sperren automatisch wieder, wenn der Laststrom über die Sinusform den Haltestrom beim Nulldurchgang unterschreitet. Die Motorspannung wird darum in Form einer angeschnittenen Halbwelle von der Regelelektronik bereitgestellt. Aus diesem Grunde ist in Fig. 4 auf der Y-Achse der Zündzeitpunkt nach dem Phasennulldurchgang der Netzspannung eingetragen.

Im Diagramm gemäß Fig. 4 bedeutet der Zündzeitpunkt 0 µs eine maximale Ausgangs- bzw. Netzspannung. Bei einem Zündzeitpunkt von 10.000 µs = 10 ms liegt keine Ausgangsspannung an. Mit zunehmender Ist-Drehzahl der Abtriebswelle 28 nimmt der Zündzeitpunkt nach dem Phasennulldurchgang ab, bis er beispielhaft bei etwa 13.000 U/min einen Minimalwert annimmt, der bei höheren Drehzahlen dann zumindest etwa konstant bleibt.

Wird von der Regelelektronik aufgrund einer hohen Belastung des Elektromotors des Antriebsgerätes ein Zündzeitpunkt unterhalb der Kennlinie verwendet, dann ist der Überlaststrom überschritten. Nach einer vorgegebenen Verzögerungszeit, die beispielsweise etwa eine Sekunde beträgt, spricht die Überlastabschaltung an. Bei blockiertem Antriebsgerät fließt dann maximal ein vorgegebener Strom, der beispielsweise etwa 4 A beträgt. Wird das Antriebsgerät wieder entlastet, erhöht sich die Drehzahl. Sobald im dargestellten Ausführungsbeispiel die Drehzahl von 1.800 U/min von der Abtriebswelle 28 wieder überschritten wird, erkennt die Regelelektronik, dass das Antriebsgerät wieder entlastet worden ist. Die mit dem Potentiometer-Rad 44 eingestellte Soll-Drehzahl der Abtriebswelle 28 wird wieder im Sanftanlauf angefahren. Es kann dann mit dem Antriebsgerät normal weitergearbeitet werden.

In Fig. 5 ist die zulässige Motorspannung in Abhängigkeit zur Ist-Drehzahl der Abtriebswelle 28 dargestellt. Die eingezeichnete Abschaltkennlinie ist die gleiche Abschaltkennlinie wie in Fig. 4, lediglich mit dem Unterschied, dass auf der Y-Achse die Motorspannung eingetragen ist, die sich aus dem in Fig. 4 angegebenen Zündzeitpunkt ergibt. Abhängig von der Vorgabe der Soll-Drehzahl der Abtriebswelle 28 und der Belastung des Antriebsgerätes stellt sich eine Ist-Drehzahl der Abtriebswelle 28 ein. Liegt die Motorspannung im Belastungsfall oberhalb der Kennlinie, dann bedeutet dies, dass die zulässige maximale Motorstrom, der beispielhaft 12, 5 A beträgt, überschritten ist. Dann wird nach einer Verzögerungszeit, die beispielsweise eine Sekunde beträgt, die Überlastschaltung betätigt und die Motorspannung reduziert. Wird das Antriebsgerät wieder entlastet, fällt die Motorspannung in einen Bereich unterhalb der Kennlinie ab. Die Regelelektronik erkennt diesen Zustand und erhöht die Drehzahl der Abtriebswelle 28 im Sanftanlauf auf die eingestellte Soll-Drehzahl. Dann kann mit dem Antriebsgerät ordnungsgemäß weitergearbeitet werden.

Die Regeleinheit regelt die Ist-Drehzahl der Abtriebswelle 28 auf den eingestellten Sollwert. Wird die maximale Regelgrenze erreicht, das heißt ist die Motorspannung gleich der Netzspannung, kann die Regeleinheit die Drehzahl der Abtriebswelle 28 nicht mehr konstant halten. Dadurch fällt die Drehzahl der Abtriebswelle 28 mit zunehmender Belastung ab, bis der Abschaltstrom erreicht wird.

Im Vergleich zu einer stromgeführten Regelung führt die Tachoregelung des Antriebsgerätes zu einer sehr genauen Konstanthaltung der Drehzahl der Abtriebswelle 28. Dies ist darauf zurückzuführen, dass die Drehzahl gemessen und nachgeregelt wird. Sollte die Drehzahl einen vorgegebenen Wert überschreiten, erfolgt die beschriebene Sicherheitsabschaltung. Der Motorstrom muss nicht gemessen werden, da der Überlastschutz mit Hilfe der Überlastkennlinie und mit Hilfe der Drehzahl und des Zündzeitpunktes (Motorspannung) realisiert wird.

## Patentansprüche

1. Verfahren zur Verwendung eines Antriebsgerätes für Werkzeuge, vorzugsweise für Kernbohrkronen, das einen in einem Gehäuse (1) untergebrachten Antriebsmotor aufweist, dessen Motorwelle (16) mit einer Abtriebswelle (28) verbunden ist, mit der das Werkzeug drehend antreibbar ist, wobei
die Ist-Drehzahl der Abtriebswelle (28) mittels einer Regeleinheit, die nach dem Prinzip der Phasenanschnittsteuerung arbeitet, auf eine Soll-Drehzahl regelbar ist, **dadurch gekennzeichnet, dass** die Belastung des Antriebsgerätes derart berücksichtigt wird, dass bei Verwendung eines Zündzeitpunktes unterhalb der Überlastkennlinie, d.h. Zündzeitpunkt nach Phasennulldurchgang - Ist-Drehzahl, durch die Regeleinheit bzw. bei einer Motorspannung oberhalb einer Abschaltkennlinie, d.h. Motorspannung - Ist-Drehzahl, nach einer vorgegebenen Verzögerungszeit eine Überlastsicherung anspricht, die die Stromaufnahme des Antriebsmotors auf einen vorgegebenen Stromwert begrenzt bzw. die Motorspannung verringert.

2. Verfahren nach Anspruch 1,
**dadurch gekennzeichnet, dass** das Antriebsgerät mit einer TemperaturAbschalteinheit versehen ist, die vorteilhaft eine PTC-Abschalteinheit ist.

3. Verfahren nach Anspruch 1 oder 2,
**dadurch gekennzeichnet, dass** das Antriebsgerät mit einer Wiederanlaufsperre versehen ist.

4. Verfahren nach einem der Ansprüche 1 bis 3,
**dadurch gekennzeichnet, dass** die Motorwelle (16) über ein Untersetzungsgetriebe (47) mit der Abtriebswelle (28) verbunden ist.

5. Verfahren nach einem der Ansprüche 1 bis 4,
**dadurch gekennzeichnet, dass** das Gehäuse (1) aus wenigstens zwei aneinander schließenden Gehäuseteilen (11, 13, 20, 21) besteht, und dass vorteilhaft an einen endseitigen Gehäuseteil (11) ein Griff (2) angeschlossen ist, der vorzugsweise mit einer Anschlussscheibe (9) an den Gehäuseteil (11) angeschlossen ist.

6. Verfahren nach Anspruch 5,
**dadurch gekennzeichnet, dass** der endseitige Gehäuseteil (11) Lüftungsöffnungen (12) aufweist.

7. Verfahren nach Anspruch 5 oder 6,
**dadurch gekennzeichnet, dass** im endseitigen Gehäuseteil (11) die Regeleinheit untergebracht ist.

8. Verfahren nach einem der Ansprüche 5 bis 7,
**dadurch gekennzeichnet, dass** an den endseitigen Gehäuseteil (11) ein den Antriebsmotor umgebender Gehäuseteil (13) anschließt.

9. Verfahren nach Anspruch 8,
**dadurch gekennzeichnet, dass** an den Motorgehäuseteil (13) über einen Zwischengehäuseteil (20) ein das Untersetzungsgetriebe (47) aufweisender Gehäuseteil (21) anschließt.

10. Verfahren nach Anspruch 9,
**dadurch gekennzeichnet, dass** im Getriebegehäuseteil (21) eine Kammer (34) für Kühlmittel untergebracht ist.

11. Verfahren nach Anspruch 10,
**dadurch gekennzeichnet, dass** in die Kammer (34) ein Kühlmittelanschluss (33) mündet.

12. Verfahren nach einem der Ansprüche 1 bis 11,
**dadurch gekennzeichnet, dass** die Abtriebswelle (28) wenigstens eine Kühlmittelbohrung (32) aufweist.

## Claims

1. A method for utilizing a drive device for tools, especially core drill bits, which has a driving motor accommodated in a housing (1), wherein the motor shaft (16) of said driving motor is connected to an output shaft (28), by means of which the tool can be rotationally driven, and wherein the actual speed of the output shaft (28) can be controlled to a nominal speed by means of a control unit that operates on the phase-angle control principle,
**characterized in that** the load of the drive device is taken into consideration in such a way that an overload safety, which respectively limits the current consumption of the driving motor to a predefined current value or reduces the motor voltage, responds after a predefined time delay when the control unit uses an ignition point below the overload characteristic, i.e. ignition point after phase zero crossing - actual speed, or when the motor voltage lies above a cutoff characteristic, i.e. motor voltage - actual speed.

2. The method according to claim 1, **characterized in that** the drive device is provided with a temperature cutoff unit, which is advantageously realized in the form of a PTC cutoff unit.

3. The method according to claim 1 or 2, **characterized in that** the drive device is provided with a restart inhibit system.

4. The method according to one of claims 1 to 3, **characterized in that** the motor shaft (16) is connected to the output shaft (28) via a reduction gear (47).

5. The method according to one of claims 1 to 4, **characterized in that** the housing (1) consists of at least two housing parts (11, 13, 20, 21) contacting one an other, and **in that** a handle (2) is advantageously connected to a housing end part (11), wherein said handle is preferably connected to the housing end part (11) with a connector plate (19).

6. The method according to claim 5, **characterized in that** the housing end part (11) features ventilation openings (12).

7. The method according to claim 5 or 6, **characterized in that** the control unit is accommodated in the housing end part (11).

8. The method according to one of claims 5 to 7, **characterized in that** a housing part (13) enclosing the driving motor is connected to the housing end part (11).

9. The method according to claim 8, **characterized in that** a housing part (21) featuring the reduction gear (47) is connected to the motor housing part (13) via an intermediate housing part (20).

10. The method according to claim 9, **characterized in that** a chamber (34) for coolant is accommodated in the gear housing part (21).

11. The method according to claim 10, **characterized in that** a coolant connector (33) leads into the chamber (34).

12. The method according to one of claims 1 to 11, **characterized in that** the output shaft (28) features at least one coolant bore (32).

## Revendications

1. Procédé destiné à utiliser un appareil d'entraînement pour outils, de préférence des outils de carottage qui comporte un moteur d'entraînement logé dans un carter (1), dont l'arbre moteur (16) est relié avec un arbre de sortie (28), à l'aide duquel l'outil est susceptible d'être entraîné en rotation,
la vitesse de rotation réelle de l'arbre de sortie (28) étant réglable à une vitesse de rotation de consigne au moyen d'une unité de réglage qui fonctionne selon le principe de redressement à l'entrée de phases,
**caractérisé en ce que** la contrainte de l'appareil d'entraînement est prise en compte de telle sorte que lors de l'utilisation d'un point d'allumage inférieur à la courbe caractéristique de surcharge, c'est-à-dire à une vitesse de rotation réelle au point d'allumage après le passage par zéro par l'unité d'allumage, respectivement lors d'une tension moteur supérieure à une courbe caractéristique de coupure, c'est-à-dire à une vitesse de rotation réelle à tension du moteur, après une temporisation prédéfinie, un fusible de sûreté qui limite la consommation de courant par le moteur d'entraînement à une valeur de courant prédéfinie ou qui réduit la tension du moteur se déclenche.

2. Procédé selon la revendication 1, **caractérisé en ce que** l'appareil d'entraînement est muni d'une unité de coupure thermique, qui est de préférence une unité de coupure CTP.

3. Procédé selon la revendication 1 ou la revendication 2, **caractérisé en ce que** l'appareil d'entraînement est muni d'un verrouillage du redémarrage.

4. Procédé selon l'une quelconque des revendications 1 à 3, **caractérisé en ce que** l'arbre moteur (16) est relié à l'arbre de sortie (28) par l'intermédiaire d'un réducteur de vitesse (47).

5. Procédé selon l'une quelconque des revendications 1 à 4, **caractérisé en ce que** le carter (1) est constitué d'au moins deux parties (11, 13, 20, 21) de carter adjacentes et **en ce qu'**avantageusement, sur une partie extrême (11) de carter est raccordée une poignée (2) qui est raccordée à la partie (11) de carter de préférence à l'aide d'une rondelle de raccordement (9).

6. Procédé selon la revendication 5, **caractérisé en ce que** la partie extrême de carter (11) comporte des orifices d'aération (12).

7. Procédé selon la revendication 5 ou la revendication 6, **caractérisé en ce que** l'unité de réglage est logée dans la partie extrême (11) de carter.

8. Procédé selon l'une quelconque des revendications 5 à 7, **caractérisé en ce qu'**une partie (13) de carter entourant le moteur d'entraînement se raccorde sur la partie extrême (11) du carter.

9. Procédé selon la revendication 8, **caractérisé en ce qu'**une partie (21) de carter comportant le démultiplicateur (47) se raccorde sur la partie (13) du carter moteur par l'intermédiaire d'une partie intermédiaire (20) de carter.

10. Procédé selon la revendication 9, **caractérisé en ce qu'**un compartiment (34) pour un agent réfrigérant est logé dans la partie (21) de carter du démultiplicateur.

11. Procédé selon la revendication 10, **caractérisé en ce qu'**un raccord (33) pour l'agent réfrigérant débouche dans le compartiment (34).

12. Procédé selon l'une quelconque des revendications 1 à 11, **caractérisé en ce que** l'arbre de sortie (28) comporte au moins un perçage (32) pour l'agent réfrigérant.
